# NEUE EUROPÄISCHE PATENTSCHRIFT

(11) **EP 0 809 940 B2**
(45) Veröffentlichungstag und Bekanntmachung des Hinweises auf die Entscheidung über den Einspruch: **27.03.2013**
(45) Hinweis auf die Patenterteilung: 10.07.2002
(21) Anmeldenummer: 97106413.4
(22) Anmeldetag: 18.04.1997
(51) Int. Cl.: A23K 1/00, B01J 2/16, C12P 13/04, C12P 29/00

(54) **Verfahren zur Herstellung eines Tierfuttermittel-Zusatzes auf Fermentationsbrühe-Basis**
Process for producing an animal feed additive based on fermentation broth
Procédé de fabrication d'un additif fourrager pour animaux à base d'un moût de fermentation

(30) Priorität: 31.05.1996 DE 19621930
(43) Veröffentlichungstag der Anmeldung: 03.12.1997
(73) Patentinhaber: Evonik Degussa GmbH, 45128 Essen (DE)
(72) Erfinder: Höfler, Andreas, Dr., 63755 Alzenau (DE); Alt, Hans-Christian, 63571 Gelnhausen (DE); Klasen, Claas-Jürgen, Dr., 63579 Freigericht (DE); Friedrich, Heinz, Dr., 63457 Hanau (DE); Hertz, Ulrich, Dr., 63456 Bruchköbel (DE); Mörl, Lothar, Prof. Dr., 39291 Hohenwarthe (DE); Schütte, Rüdiger, Dr., 63755 Alzenau (DE)
(74) Vertreter: Fleischer, Holm Herbert

(56) Entgegenhaltungen:
- EP-A- 0 407 325
- EP-A- 0 538 975
- EP-A2- 0 345 717
- WO-A-93/24215
- DE-A- 3 424 842
- US-A- 4 073 838
- US-A- 4 556 175
- US-A- 4 623 098
- PATENT ABSTRACTS OF JAPAN vol. 004, no. 085 (C-015), 18. Juni 1980 & JP 55 049135 A (SHIONOGI & CO LTD), 9. April 1980
- DATABASE WPI Section Ch, Week 7842 Derwent Publications Ltd., London, GB; Class D14, AN 78-75244A XP002099355 & JP 53 104574 A (OKAWARA SEISAKUSHO KK) , 11. September 1978
- D.STOCKBURGER: 'Fortschritte u. Entwicklungstendenzen in der Trocknungstechnik bei der Trocknung formloser Güter', 1976 Seiten 199 - 204
- K.KRÖLL: 'Trockner und Trocknungsverfahren ,Trocknungstechnik Zweiter Band', 1978, SPRINGER VERLAG, BERLIN,HEIDELBERG,NEW YORK Seiten 221 - 246

## Beschreibung

Die Erfindung bezieht sich auf ein Verfahren zur Herstellung eines Tierfuttermittel-Zusatzes auf Fermentationsbrühe-Basis, wobei der Zusatz ein Fermentationsprodukt und die weiteren Inhaltsstoffe der Fermentationsbrühe vollständig oder zu einem überwiegenden Teil enthält.

Tierfuttermittel werden mit einzelnen Aminosäuren entsprechend dem Bedarf der Tiere supplementiert. Zur Supplementierung von Tierfuttermitteln, z. B. mit L-Lysin, wird bisher weit überwiegend das L-Lysin-monohydrochlorid mit einem L-Lysin-Gehalt von 78 % eingesetzt. Da das L-Lysin durch Fermentation hergestellt wird, muß es zur Herstellung des Monohydrochlorids zunächst einmal von allen übrigen Bestandteilen der rohen Fermentationsbrühe in aufwendigen Verfahrensschritten abgetrennt, dann in das Monohydrochlorid umgewandelt und letzteres zur Kristallisation gebracht werden. Dabei fallen eine große Anzahl von Nebenprodukten und die zur Aufarbeitung notwendigen Reagentien als Abfall an. Da eine hohe Reinheit des Tierfuttermittelsupplements nicht immer notwendig ist und zudem in den Nebenprodukten der Fermentation oft noch nutritiv wirksame Wertstoffe enthalten sind, hat es daher in der Vergangenheit nicht an Versuchen gefehlt, die aufwendige Herstellung von Futter-Aminosäuren, insbesondere von reinem L-Lysin-monohydrochlorid zu vermeiden und die rohe Fermentationsbrühe kostengünstiger in ein festes Tierfuttermittel zu überführen. Alle diese Versuche haben aber zu keinem wirtschaftlich tragbaren Ergebnis geführt.

Als gravierender Nachteil hat sich die komplexe Zusammensetzung solcher Medien erwiesen, denn diese sind generell nur schlecht zu trocknen, dann hygroskopisch, praktisch nicht rieselfähig, verklumpungsgefährdet, und für die technisch anspruchsvolle Verarbeitung in Mischfutterwerken nicht geeignet. Vor allem Fermentationsprodukte des Lysins sind hier besonders benachteiligt. Die einfache Entwässerung der rohen Fermentationsbrühe durch Sprühtrocknung führte zu einem staubigen, stark hygroskopischen und nach kurzer Lagerzeit klumpigen Konzentrat, das in dieser Form nicht als Tierfuttermittel eingesetzt werden kann.

Um zu einem rieselfähigen und lagerungsstabilen Produkt zu gelangen, mußte eine große Menge an den verschiedenartigsten Zuschlagstoffen in das Konzentrat eingemischt werden. Dadurch wurde aber der in vielen Fällen ohnehin schon relativ geringe Gehalt der Aminosäure noch weiter vermindert. Ein solches Produkt wird z. B. in der DE-OS 23 57 119 beschrieben, gemäß der aus der Fermentationsbrühe, ggf. nach Entfernung der Biomasse, ein Konzentrat gefertigt und dieses anschließend mit Hilfsstoffen versetzt wird. Alternativ kann das Lysin aus dem Konzentrat auch durch Ausfällung mit Methanol freigesetzt werden. Auch die DD 139 205, Upr. Mirkoben. Sint., 111 - 118 (1973), CA 105 (19): 170542g, DE 30 32 618, US 4,327,118 und CS 250 851, beschreiben solche mit Zuschlagstoffen versetzte fermentativ hergestellte Futtermittel-Additive.

Aus der EP 0 122 163 und US 5,133,976 ist ein Verfahren bekannt, nach dem bei Einhaltung ganz spezieller Fermentationsbedingungen eine rohe Fermentationsbrühe erhalten werden kann, die sich zu einem festen und stabilen Produkt eintrocknen läßt. Aber auch hier beträgt der Gehalt an L-Lysin nur 35 - 48 Gew.-%. Hieraus ist auch bekannt, daß eine Entwässerung durch azeotrope Destillation mit Paraffinöl zu akzeptablen Produkten führt. Aber auch dieses Verfahren ist aufwendig und kostenintensiv. Analog wurde hierzu auch das toxikologisch bedenkliche Tetrachlormethan verwendet (CS 164 706).

Der Einsatz eines Sprühtrockners mit integrierter Wirbelschicht liefert ein feinteiliges und poröses, aber rieselfähiges Sprühkorn mit sehr geringer Schüttdichte und immer noch hoher Hygroskopizität. Beim Handling dieses Produktes entsteht eine erhebliche Staubbelastung.

Eine Aufbaugranulation in der Wirbelschicht erwies sich ebenfalls als wenig geeignet, da auch hier große Mengen Zuschlagstoffe (i. d. R. mehr als 100 Gew.-%) erforderlich sind, wobei diese in der DD 268 856 kontinuierlich zugegeben werden. Dabei ist deren Einsatz insbesondere deswegen essentiell, um aus der Fermentationsbrühe das Wasser zu binden, um so ein Verklumpen des Granulats zu verhindern, was sich insbesondere für die Aufbaugranulation nachteilig auswirken würde.

Weitere Verfahren zur Herstellung von Tierfuttermittelzusätzen auf Fermentationsbrühebasis sind aus der US 4,777,051, der EP 0 533 039 sowie der EP 0 615 693 bekannt.

Die US 4,777,051 offenbart ein Sprühtrocknungsverfahren mit nachgeschaltetem zusätzlichen Trocknungsschritt. Tryptophan- oder Threonin-Lösungen mit einem Gehalt von 5 - 95 wt-%, bezogen auf den Gesamt-Feststoffgehalt, werden in einem ersten Schritt zu einem halbtrockenen Granulat mit einer Restfeuchte von ca. 10 % versprüht. Anschließend wird das feuchte Granulat auf einem Förderbandtrockner mit Lochboden ausgebreitet und mit heißer Luft endgetrocknet, wobei ein Produkt von etwa 4 Gew.-% Restfeuchte erhalten wird.

Die Trocknung wird demnach in zwei Stufen in zwei verschiedenen Apparaten ausgeführt, was insgesamt aufwendig ist.

Die EP 0 533 039 beschäftigt sich auch mit Verfahren zur Herstellung eines Aminosäure-Tierfuttermittelsupplements auf Fermentationsbrühebasis, wobei das Supplement direkt durch Sprühtrocknung aus der Fermentationsbrühe gewonnen werden kann. Hierzu wird bei einer Variante ein Teil der Biomasse vor der Sprühtrocknung abgetrennt. Durch eine sehr saubere Führung der Fermentation, d. h. bei Erhalt einer an organischen Substanzen rückstandsarmen Fermentationsbrühe, kann die Brühe sogar ohne die Biomasse und ohne zusätzlichen Trägerhilfsstoff zu einem handhabbaren Granulat getrocknet werden.

Nachteilig beim Verfahren der EP 0 533 039 ist zum einen der Biomasseabtrennschritt und zum anderen die starke Abhängigkeit des Sprühtrocknungsverfahrens von der vorherigen Fermentationsführung. D. h., das Spektrum an tatsächlich zu verarbeitenden Brühen ist vergleichsweise eng. Nachteilig ist weiterhin, daß ein Produkt mit einer relativ geringen Schüttdichte von < 530 kg/m³ und relativ hoher Hygroskopizität erzielt wird.

Die EP 0 615 693 löst dieses Problem wieder durch ein zweistufiges Trocknungsverfahren.

Hierin offenbart wird ein Verfahren zur Herstellung eines Tierfuttermittel-Additives auf Fermentationsbrühe-Basis, bei dem man die Fermentationsbrühe, ggf. nach Entfernung eines Teils der Inhaltsstoffe, zu einem Feinkorn, das zu mind. 70 Gew.-% eine maximale Partikelgröße von 100 µm hat, sprühtrocknet, und daß man dieses Feinkorn in einer zweiten Stufe zu einem Granulat aufbaut, das zu mind. 30 Gew.-% das Feinkorn enthält.

Neben der Zweistufigkeit des Trocknungs-Granulationsverfahrens ist von besonderem Nachteil bei diesem Prozeß, daß die mechanische Granulation durch stark scherende Mischwerkzeuge, mit denen das Feinkorn bevorzugt zum Granulat aufgebaut wird, nur chargenweise, d. h. nicht kontinuierlich erfolgen kann. In der Praxis hat es sich nämlich gezeigt, daß der Granulationsprozeß im bevorzugt eingesetzten Eirich-Intensivmischer zu festen Anbackungen führt. Dadurch kommt es zu häufigen Unterbrechungen (mehrfach am Tag) des Granulationsschrittes, während denen die Eirich-Mischer von Hand zu reinigen sind. Durch den Chargenbetrieb ergeben sich naturgemäß ungewünschte Produktschwankungen. Das zweistufige Trocknungs-Granulations-Verfahren bedeutet hohe Investions-, Wartungsund Energiekosten und ist insofern aufwendig. Zugleich ist das zweistufige Verfahren personalintensiv und deswegen nachteilig.

Angesichts des hierin angegebenen und diskutierten Standes der Technik war es mithin Aufgabe der Erfindung, ein Verfahren der eingangs erwähnten Art so fortzubilden, daß es kontinuierlich und stationär betrieben werden kann, wobei das Verfahren möglichst einfach und kostengünstig die Herstellung eines möglichst wenig hygroskopischen oder klebrigen Produkts möglich machen soll. Zugleich sollen die Trocknung und.Granulierung möglichst in einem Schritt geschehen, und zwar selbst bei relativ wenig "sauberen" Fermentationsbrühen. Außerdem soll das Verfahren der Erfindung die Standardisierung der Eigenschaften des Tierfuttermittel-Zusatzes auf einfache Weise zulassen.

Gelöst werden diese sowie weitere nicht im einzelnen angegebene Aufgaben durch den Gegenstand des Anspruches 1. Vorteilhafte Verfahrensmodifikationen sind Gegenstand der auf Anspruch 1 rückbezogenen Ansprüche.

Dadurch, daß die Fermentationsbrühe in einer Wirbelschicht in einem Schritt granuliert, kompaktiert und getrocknet wird, während eine zur Einstellung eines gewünschten Korndurchmessers und einer gewünschten Schüttdichte ausreichende Energiemenge zusätzlich zu der zur Erzeugung der Wirbelschicht benötigten Energie auf mechanischem Wege in die Wirbelschicht eingetragen wird, gelingt es u. a. in einem einzigen Verfahrensschritt spezifikationsgerechte Granulate von Tierfuttermittelzusätzen unter Verwendung von insbesondere Fermentationsbrühekonzentraten, wie sie bei der Aufarbeitung von Fermentationsbrühen anfallen, als Ausgangsstoff kontinuierlich herzustellen. D. h., zur Erzielung eines spezifikationsgerechten Produktes sind keine Zuschlagstoffe nötig. Deren Zusatz ist jedoch nicht ausgeschlossen. So können weitere übliche Zuschlagstoffe, wie z. B. Perlite, eingesetzt werden, solange die erfindungsgemäßen Merkmale erhalten bleiben. Vorzugsweise sind solche zusätzlichen Zuschlagstoffe auf unter 10 Gew.-% im Endprodukt beschränkt, insbesondere liegen sie bei max. 5 Gew.-%. Erfindungsgemäß können solche Zuschlagstoffe auch unter 1 % eingesetzt werden. Es ist jedoch ganz besonders zweckmäßig und im Rahmen der Erfindung auch angestrebt, Zuschlagstoffe ganz wegzulassen.

Besonders bemerkenswert ist bei Anwendung des erfindungsgemäßen Verfahrens, daß die Wirbelschicht-Granulationstrocknung kontinuierlich betreibbar ist. Hierdurch gelingt es äußerst überraschend, die Zweistufigkeit des Trocknungs-Granulationsverfahrens gemäß dem Stand der Technik zu vermeiden, was insbesondere das händische Reinigen des für die zweite Stufe des zweistufigen Verfahrens (Granulationsstufe) üblicherweise eingesetzten Eirich-Intensivmischers überflüssig macht.

Darüber hinaus gestattet das erfindungsgemäße Verfahren ferner besonders vorteilhaft die Erzielung von Produkten mit hohen Schüttdichten, wobei der Partikelaustrag kontinuierlich in einem klassierenden Abzug erfolgen kann und die Partikelverteilung im stationären Betrieb konstant bleibt.

Die erzeugten Partikel haben außerdem eine ausgezeichnete Festigkeit und weisen durch ihre im wesentlichen runde Form bedingt hervorragende Schütt- und Fließeigenschaften auf.

Die nach dem erfindungsgemäßen Verfahren erhältlichen Produkte weisen eine äußerst geringe Feuchte auf und sind nicht hygroskopisch.

Durch Verwendung einer wie hierin weiter unten beschriebenen Vorrichtung wird ein kontinuierlicher Betrieb ermöglicht, wobei weder an den Wänden oder an sonstigen Aggregaten, wie Düse, Siebboden oder mechanischem Verdichter, einer Wirbelschicht-Trocknungsgranulationsanlage Anbackungen festzustellen sind.

Bei der zur Durchführung des Verfahrens der Erfindung bevorzugt einzusetzenden Wirbelschicht-Granulationstrocknung handelt es sich um eine Methode zum Verfestigen von Flüssigkeiten. Dabei wird eine Wirbelschicht erzeugt, was bedeutet, daß die Feststoffpartikel in einem aufwärts gerichteten Luft- oder Inertgasstrom in der Schwebe gehalten werden. In diesem Zustand sind die Feststoffpartikel voneinander getrennt und so beim Einsprühen von weiterer Flüssigkeit in das Bett für die Sprühtropfen rundum zugänglich. Außerdem ist in diesem Zustand der Wärme- und Stoffaustausch zwischen den Feststoffpartikeln und dem Gasstrom intensiv. Die Wirbelschicht oder das Bett aus Partikeln, welches zu Beginn der Wirbelschicht-Granulationstrocknung vorhanden sein muß, besteht günstigerweise aus einer Charge eines vorherigen Laufes. Es ist jedoch genausogut möglich; einen von dem zu versprühenden Fermentationsbrühekonzentrat abweichenden Stoff als Wirbelschicht einzusetzen. Wenn nun ein schwebendes Partikel der Wirbelschicht bzw. des Bettes von einem Sprühtropfen des Fermentationsbrühekonzentrates getroffen wird, verteilt sich das flüssige Produkt des Sprühtropfens auf dem festen Untergrund durch Spreitung. Wegen des intensiven Wärme- und Stoffaustausches mit dem umgebenden Gasstrom kommt es rasch zu einer Verfestigung des Flüssigkeitsfilmes durch Trocknung, wenn es sich bei dem Ausgangsprodukt um eine Lösung oder Suspension handelt, oder durch Abkühlen, wenn das eingesprühte Produkt geschmolzen ist. Durch vielfaches Aufsprühen, Spreiten, Verfestigen wächst das Partikel an. Es ist kompakt und auch nahezu rund.

Es versteht sich, daß zur Erzeugung der Wirbelschicht ein gewisser Energieeintrag nötig ist. Dies geschieht, wie bereits oben erwähnt, i. d. R. durch einen aufwärts gerichteten Luft- oder Inertgasstrom, welcher die Wirbelschicht bzw. das Bett in Schwebe hält. Im Rahmen der Erfindung ist es nun wichtig, daß zusätzlich zu der zur Erzeugung der Wirbelschicht benötigte Energie auf mechanischem Wege eine weitere Energie in die Wirbelschicht eingetragen wird. Durch diesen Eintrag kommt es offensichtlich zu einem Prozeß, welcher dem Granulatwachstum entgegenwirkt. In der stationären Wirbelschicht, d. h., wenn eine konstante Wirbelschicht aus getrocknetem und granuliertem Eingangsmaterial dauerhaft betrieben wird, wobei kontinuierlich die Feed-Brühe eingedüst wird und kontinuierlich ein Granulatstrom abgezogen wird, führt eine feine Eindüsung zu einem schalenförmigen kompakten Granulatwachstum auf den Körnern in der Wirbelschicht. Durch den zusätzlichen Eintrag von mechanischer Energie in die Wirbelschicht wird ein weniger starkes Granulatwachstum bzw. eine Nivellierung der Partikeldurchmesser erreicht. Dabei handelt es sich bei diesen dem normalen Wachstumsprozeß entgegengesetzten Vorgängen um erwünschte Prozesse, die nicht auf einer Partikelzerstörung oder auf krankhaftem Wachstum von Partikeln basieren. Es war hierbei insbesondere überraschend, daß entgegen der Zerstörung durch Abrieb, welche in allen Größenklassen der Partikel auftreten kann, kein zusätzlicher Staub entsteht, der durch Agglomeration zu einem neuen Keim werden kann. Auch hat der Eintrag zusätzlicher mechanischer Energie nicht dieselbe Wirkung wie der unter üblichen Bedingungen auftretende Partikelbruch, zu dem es beispielsweise bei Kollision von Partikeln und/oder durch Temperaturschock beim Besprühen der Partikel kommen kann. Obwohl sowohl Abrieb als auch Partikelbruch bei zusätzlichem Eintrag mechanischer Energie auftreten können, scheint im erfindungsgemäßen Fall die Wirkung nicht nachteilig zu sein, was um so weniger vorhersehbar war.

In bevorzugter erfindungsgemäßer Verfahrensmodifikation ist zu erkennen, daß die zusätzliche mechanische Energie eine Erhöhung der Schüttdichte und eine Verringerung des mittleren Korndurchmessers bewirkt, verglichen mit einer Wirbelschicht-Granulationstrocknung, bei der keine zusätzliche mechanische Energie eingetragen wird. Dabei ist, wie bereits oben ausgeführt, sowohl von einem Abrieb als auch einem Partikelbruch auszugehen, es ist jedoch besonders bevorzugt, daß die zusätzliche eingetragene mechanische Energie im Sinne einer Oberflächenbehandlung und Kompaktierung auf das sich aufbauende Korn einwirkt. Hierbei wird im erfindungsgemäßen Rahmen unter Oberflächenbehandlung im wesentlichen die Veränderung der Partikelgröße durch Abrieb verstanden.

Das Verfahren zur Herstellung eines Tierfuttermittelzusatzes auf Fermentationsbrühe-Basis wird so ausgeführt, daß die zusätzliche Energie durch bewegliche flächenförmige Gebilde in das Wirbelbett bzw. in die Wirbelschicht eingetragen wird. Hierbei kann es sich um rotierende Messer, Flügel, Klingenflächen, Flacheisen oder Verdichter handeln, welche in der Kammer des Wirbelbetts verwendet werden. Dabei ist es möglich, die Messer, Klingen, Flacheisen, Verdichter oder dergleichen mechanisch anzutreiben und so eine ständige Zerkleinerung der Granulatkörner zu erzielen, so daß die Partikel des Wirbelbettes unter einer gewissen Korngröße bleiben. Es sind jedoch auch alle anderen dem Fachmann geläufigen Werkzeuge möglich, welche beispielsweise direkt in das Wirbelbett eintauchen können. So ist die Verwendung von rotierenden Schnecken oder stark scherenden Mischwerkzeugen vorstellbar, wobei auch diese Werkzeuge auf das Korn oder Granulat im Wirbelbett einwirken und mit den Partikeln in Wechselwirkung treten.

Bei der erfindungsgemäßen Verfahrensweise resultiert besonders vorteilhaft ein verdichtetes Produkt, welches durch die ständige Zerkleinerung und den Abrieb der Granulatkörner unter einer gewissen Korngröße bleibt. Die Kornobergrenze ist hierbei eine Funktion des auf den Feststoffdurchsatz bezogenen Energieeintrages durch beispielsweise den Verdichter, die rotierenden Messer oder die rotierende Schnecke. Vorzugsweise wird das Verfahren der Erfindung so betrieben, daß die mittlere Partikelgröße des Tierfuttermittelzusatzes auf Werte zwischen 0,1 und 1,5 mm eingestellt wird, vorzugsweise liegen 95 % der Partikel im Bereich zwischen 0,1 und 1,5 mm Größe. Darüber hinaus ist es besonders zweckmäßig, wenn die Größe der Teilchen des Tierfuttermittelzusatzes so eingestellt wird, daß 95 % der Partikel im Bereich zwischen 0,3 und 1,5 mm liegen. In einer noch weiteren vorzugsweisen Variante des erfindungsgemäßen Verfahrens ist es bevorzugt, daß 95 % der Partikel im Bereich zwischen 0,3 und 1,2 mm liegen.

Wie bereits erwähnt, resultiert beim erfindungsgemäßen Verfahren in einem Schritt in einem einzigen Aggregat aus einer Fermentationsbrühe, die eingedickt, teilweise oder ganz von Biomasse befreit oder im Originalzustand sein kann, ein Produkt mit einer ausgezeichneten Schüttdichte. Dabei ist die Schüttdichte des Tierfuttermittelzusatzes vorzugsweise auf > 600 kg/m³ eingestellt. In noch weiterer zweckmäßiger Verfahrensmodifikation läßt sich die Erfindung so ausführen, daß in einem einzigen Schritt die Schüttdichte des Tierfuttermittelzusatzes auf > 700 kg/m³ eingestellt wird.

Daneben lassen sich nach dem erfindungsgemäßen Verfahren Tierfuttermittelzusätze mit herausragender Abriebsfestigkeit des Granulates erhalten. So ist es bei geeigneter Verfahrensführung ohne weiteres möglich, die Abriebsfestigkeit des Tierfuttermittelzusatzes auf Abriebswerte im Bereich von < 1,0 Gew.-% einzustellen. Besonders bevorzugt wird das Verfahren der Erfindung so geführt, daß die Abriebsfestigkeit des Tierfuttermittelzusatzes auf einen Abrieb zwischen 0 und 0,3 Gew.-% gestellt wird.

Die Schaffung solch vorteilhafter Granulate von Tierfuttermittelzusätzen auf Fermentationsbrühe-Basis gelingt bevorzugt mit einem zusätzlichen mechanischen Energieeintrag pro Tonne Granulat im Bereich von 8 bis 20 kWh/t. Besonders vorteilhaft liegt.der zusätzliche Eintrag mechanischer Energie, bestimmt als spezifischer Energieeintrag pro Tonne Granulat, im Bereich zwischen 12 und 16 kWh/t.

Wie bereits erwähnt, können die nach dem erfindungsgemäßen Verfahren erhältlichen Tierfuttermitteladditive durch Versprühen von Fermentationsbrühen in Wirbelschicht-Granulationstrocknungsanlagen erhalten werden, wobei die Fermentationsbrühe, welche versprüht werden soll, eingedickt, teilweise oder ganz von Biomasse befreit oder im Originalzustand, d. h. unbehandelt, sein kann. Die Fermentationsbrühe bzw. das gemäß der Erfindung ebenfalls zu versprühende Konzentrat werden nach bekannten Verfahren erhalten. Für das Tierfuttermitteladditiv gemäß der Erfindung werden solche Fermentationsbrühen als Basis verwendet, die als Fermentationsprodukt Lysin enthalten.

Die erfindungsgemäß erhältlichen Tierfuttermitteladditive auf Fermentationsbrühe-Basis weisen im Falle eines Aminosäureadditivs beispielsweise folgende Zusammensetzung der Trockenmasse auf:

| | |
|---|---|
| Freie Supplementaminosäure | 40 - 90 Gew.-% |
| Proteine | max. 0,5 - 20 Gew.-% |
| Carbonsäure mit weniger als 8 C-Atomen | max. 13 Gew.-% |
| Gesamtzucker | max. 10 Gew.-% |
| Fette und Öle | max. 6 Gew.-% |
| Mineralstoffe | max. 3 - 30 Gew.-%. |

Dieses Produkt enthält vorzugsweise alle Inhaltsstoffe der Fermentationsbrühe.

Vorzugsweise werden gemäß der Erfindung Tierfuttermitteladditive erhalten, bei denen die Komponenten innerhalb der folgenden angegebenen Bereiche liegen:

| | |
|---|---|
| Proteine | 10 - 16 Gew.-% |
| Carbonsäure mit weniger als 8 C-Atomen | max. 8 Gew.-% |
| Gesamtzucker | 2 - 10 Gew.-% |
| Mineralstoffe | 5 - 25 Gew.-%. |

Üblicherweise enthalten die erfindungsgemäß zugänglichen Produkte einen Restwassergehalt von etwa 0,1 Gew.-%. Um ein Verklumpen zu vermeiden, sollte der Wassergehalt 5 Gew.-%, max. jedoch 10 Gew.-%, nicht überschreiten.

Der Proteingehalt wird ermittelt aus dem Gesamtstickstoffgehalt minus anorganischem Stickstoffgehalt minus Stickstoffgehalt der freien Aminosäuren und Multiplikation des erhaltenen Wertes mit 6,25 ((GesamtN% - anorg.N% - ASN%) x 6,25). Der Gesamtstickstoffgehalt wird bestimmt durch Aufschluß nach Keldal (Standardverfahren), der anorganische Stickstoffgehalt (Ammoniumm minus Gehalt) z. B. wird bestimmt kolorimetrisch, titrimetrisch oder potentiometrisch, der Stickstoffgehalt der freien Aminosäure wird durch die quantitative Bestimmung der freien Aminosäuren (Aminosäureanalysator (ASA)) mit anschließender Berechnung des N-Gehalts ermittelt. Als Mineralstoffe wird die Gesamtheit aller anorganischen Kationen und Anionen bezeichnet.

Der Proteingehalt in den erfindungsgemäß zugänglichen Granulaten liegt üblicherweise zwischen 0,5 bis 20 Gew.-%, wobei die Proteine erfindungsgemäß auch zur Erhöhung der Stabilität des Granulats verwendet werden. Deshalb ist ein unterer Bereich von 0,5 Gew.-% anzustreben, besonders günstige Granulate erhält man bei höheren Proteingehalten zwischen 8 und 18 Gew.-% und insbesondere ab über 10 Gew.-%.

Üblicherweise enthalten die erfindungsgemäß zugänglichen Additive bis zu 20 Gew.-% Fermentationsbiomasse.

Bei der Herstellung von Lysin mit Corynebacterium glutamicum bzw. Escherichia coli K12 Abkömmlingen liegt der Aminosäuregehalt i. d. R. etwas niedriger.

Vorzugsweise liegt im gemäß der Erfindung erhältlichen Additiv überwiegend nur eine Komponente,die Aminosäure, Lysin als Wirkstoff vor. Ein solches Additiv ist dann universell entsprechend seinem Wirkstoffgehalt zu jedem Futter oder zu Prämixen zudosierbar. Bei definierten Futtermischungen kann es aber auch zweckmäßig sein, daß mehrere Komponenten, insbesondere Aminosäuren, in dem Additiv in einem bestimmten Verhältnis zueinander vorliegen, so daß mit nur einem Additiv die gewünschte Anreicherung erreicht wird. Das Verhältnis dieser Wirkstoffe kann beispielsweise durch Mischen mehrerer Fermentationsbrühen oder Additive sowie auch durch Zudosieren vorteilhaft geringerer Mengen reiner Wirkstoffe, z. B. Aminosäuren, erhalten werden. Neben einem einzelnen Wirkstoff oder mehreren gezielt enthaltenden bzw. definierten Wirkstoffen im Additiv sollten möglichst wenig weitere undefinierte oder nicht zur Supplementierung geeignete Wirkstoffe im Additiv vorhanden sein.

Die verwendeten Fermentationsbrühen haben üblicherweise einen Feststoffgehalt von 7,5 bis 26 Gew.-% und enthalten im Falle von Aminosäuren als Wirkstoff diese zu 1 bis 20 Gew.-%. Besonders vorteilhaft sind im Fall von Aminosäuren solche Fermentationsverfahren, bei denen die Aminosäure zu mindestens 40 Gew.-% in der Trockenmasse nach Beendigung der Fermentation vorliegen. Vorteilhaft ist außerdem auch, wenn die Fermentation zumindest am Ende, vorteilhaft jedoch über mindestens 30 % der Fermentationsdauer, zuckerlimitiert gefahren wird, d. h., daß die Konzentration an verwertbarem Zucker im Fermentationsmedium auf max. 0,3 Gew.-% gehalten bzw. abgesenkt wird.

Hergestellt werden die Fermentationsbrühen für Aminosäuresupplemente vorteilhaft derart, daß man einen mindestens eine Aminosäure produzierenden Mikroorganismus in einem Fermentationsmedium kultiviert, das mindestens eine Kohlenstoffquelle, mindestens eine Stickstoffquelle, Mineralsalze und Spurenstoffe enthält, wobei man die Fermentation so führt, daß an ihrem Ende eine rohe Fermentationsbrühe mit einem Gehalt an verwertbarem Zucker von max. 4 g/l und insbesondere mit einem Feststoffgehalt von 7,5 bis 26 Gew.-%, einem Aminosäuregehalt von 1 bis 20 Gew.-%, vorteilhaft von 4 bis 10,5 Gew.-%, und einem Zuckergehalt von max. 2,6 Gew.-% erhalten wird.

Unter Verwendung geeigneter Mikroorganismen wird die Fermentation vorteilhaft so kultiviert, daß die Trockenmasse der Fermentationsbrühe max. 15 Gew.-% an Protein und insbesondere mindestens 40 Gew.-% an Aminosäuren, max. 8 Gew.-% an Carbonsäure mit weniger als 8 C-Atomen, max. 10 Gew.-% an Gesamtzucker, max. 5 Gew.-% an Fetten und Öl und max. 5 bis 30 Gew.-% an Mineralstoffen enthält. Gegen Ende der Fermentation wird der Gehalt an verwertbarem Zucker auf max. 1 g/l eingestellt, d. h., es wird kein Zucker zugegeben, und die Fermentation erst bei Erreichen oder Unterschreiten dieses Wertes abgebrochen.

Um den Aminosäuregehalt in der Trockenmasse zu erhöhen oder um die Trockenmasse auf einen bestimmten Gehalt an Aminosäure zu standardisieren oder um den Proteingehalt der Trockenmasse zu erniedrigen, kann die Biomasse ggf. andere Stoffe durch mechanische Trenntechniken und unter Belassen der überwiegenden Anteile der restlichen Komponenten der Fermentationsbrühe vorzugsweise nach Ende der Fermentation entfernt werden.

Wenn keine Biomasse abgetrennt werden soll, ist die Fermentation vorteilhaft so zu führen, daß möglichst wenig Biomasse produziert wird, wobei die zugegebenen Mehrstoffe am Ende möglichst weitgehend verbraucht sein sollen. Eine solche Fermentation ist z. B. in der DE-A 41 30 867, Beispiel 3, beschrieben. Vorteilhafterweise wird die Fermentation so geführt, daß über mindestens 30 %, vorzugsweise über 70 %, der Fermentationsdauer die Konzentration an verwertbarem Zucker in der Fermentationsbrühe höchstens 0,3 Gew.-% beträgt.

Als Aminosäure produzierende Mikroorganismen wurden für Lysin bevorzugt geeignete Mutanten der Spezies Corynebacterium oder Brevibacterium verwendet, z. B. der bei der Deutschen Sammlung für Mikroorganismen unter DSM 5715 hinterlegte und erhältliche Stamm.

Als Kohlenstoffquelle werden vorzugsweise Stärkehydrolysate (Glucose) oder Saccharose eingesetzt. Ein geringer Anteil kann auch aus Zuckerrüben oder Zuckerrohrmelasse stammen.

Dieser Anteil sollte 5 Gew.-% der Gesamtkohlenstoffquelle nicht überschreiten (= 10 Gew.-% Melasse in der Gesamtkohlenstoffquelle).

als Stickstoffquelle dienen neben Ammoniak oder Ammoniumsulfat Hydrolysate von Protein enthaltenden Stoffen, wie Maiskleber, Sojamehl oder der Biomasse aus einem vorhergehenden Ansatz oder beispielsweise Maisquellwasser oder Fischpepton.

Die Fermentationstemperatur liegt zweckmäßigerweise zwischen 30 und 40 °C, der pH-Wert des Fermentationsmediums zwischen 6,0 und 8,0. Die Dauer der Fermentation beträgt im allgemeinen maximal 100 h.

Nach dem Ende der Fermentation können die Mikroorganismen thermisch oder auch durch andere Verfahren, z. B. durch Zusatz einer Mineralsäure, wie Schwefelsäure, abgetötet werden.

Anschließend wird ggf. die Biomasse (teilweise) nach bekannten Verfahren, wie Separieren, Dekantieren, einer Kombination von Separieren und Dekantieren, Ultrafiltration oder Mikrofiltration, abgetrennt.

Die Fermentationsbrühe wird dann durch bekannte Verfahren, z. B. in einem Dünnschicht- oder Fallfilmverdampfer, zu einem Vorkonzentrat mit einem Feststoffgehalt von 30 bis 60 Gew.-% eingedickt. Dieses Vorkonzentrat kann dann ebenso wie die Fermentationsbrühe direkt dem erfindungsgemäßen Wirbelschicht-Granulationstrocknungsverfahren unterworfen werden.

Sofern eine Standardisierung des erfindungsgemäßen Tierfuttermittels bezüglich des Gehalts der Aminosäure erwünscht ist, kann dies beispielsweise durch entsprechende Wahl der Menge an verbleibender Biomasse und/oder geeignetes Abmischen von Vorkonzentraten und/oder Fermentationsbrühen erfolgen. Entsprechend können auch Biomasse-freie oder -reduzierte Brühen mit Originalbrühen zur Standardisierung gemischt werden. Eine andere Möglichkeit ist der Zusatz geringer Mengen an futtermittelrechtlich unbedenklichen Zuschlagstoffen, wie Weizenkleie, Maisspindelmehl oder Perlite.

Die gemäß dem Verfahren der Erfindung erhältlichen Tierfuttermittel-Additive, also Verfahrensprodukte, finden Verwendung zur Supplementierung oder Herstellung eines Tierfuttermittels oder Prämixes für Tierfuttermittel.

Im folgenden wird eine Vorrichtung beschrieben, die speziell an das erfindungsgemäße Verfahren adaptiert ist. Es handelt sich hierbei um eine Vorrichtung zur Herstellung eines Tierfuttermittelzusatzes auf Fermentationsbrühe-Basis, aufweisend einen Wirbelschicht-Granulationstrockner mit einer Trocknungskammer, die von unten nach oben von Heißluft durchströmt wird, wobei in der Trocknungskammer ein Gasverteilerboden angeordnet ist, über welchem sich im Betrieb Trockenprodukt im fluidisierten Zustand in einer Wirbelschicht befindet, wobei die Vorrichtung dadurch ausgezeichnet ist, daß in der Wirbelschichtzone wenigstens ein separat regelbares Aggregat zur Einbringung von zusätzlicher mechanischer Energie in die Wirbelschicht angeordnet ist.

Bei dem regelbaren Aggregat handelt es sich in bevorzugter Ausführungsform um mechanisch oder elektrisch betriebene Verdicher, welche mit rotierenden Flächen, Flügeln oder Messern ausgestattet sind. Das regelbare Aggregat ist dabei so anzuordnen, daß es mit den Oberflächen der die Wirbelschicht oder das Wirbelbett bildenden Partikel in Wechselwirkung treten kann. Dabei ist es ausreichend, daß bei Betrieb des Wirbelbettes (unter Anströmung von Luft) ein Kontakt der Partikel mit dem regelbaren Aggregat möglich ist. Bevorzugt ist es jedoch, wenn die rotierenden Flächen, Flügeln oder Messer des regelbaren Aggregates vollständig in das Wirbelbett eintauchen. In diesem Zustand ergibt sich ein besonders günstiger spezifischer Energieeintrag durch das regelbare Aggregat.

Nachfolgend wird die Erfindung unter Bezugnahme auf die beigefügten Figuren sowie die zur Erläuterung dienenden Ausführungsbeispiele eingehender diskutiert:

In den Figuren zeigen
- Fig. 1: eine schematische Darstellung einer Wirbelschicht-Trocknungsgranulationsanlage im Querschnitt;
- Fig. 2: eine vergrößerte Darstellung im Querschnitt der Einzelheit "A" aus Figur 1; und
- Fig. 3: einen Schnitt aus Figur 2 längs der Linie B-B.

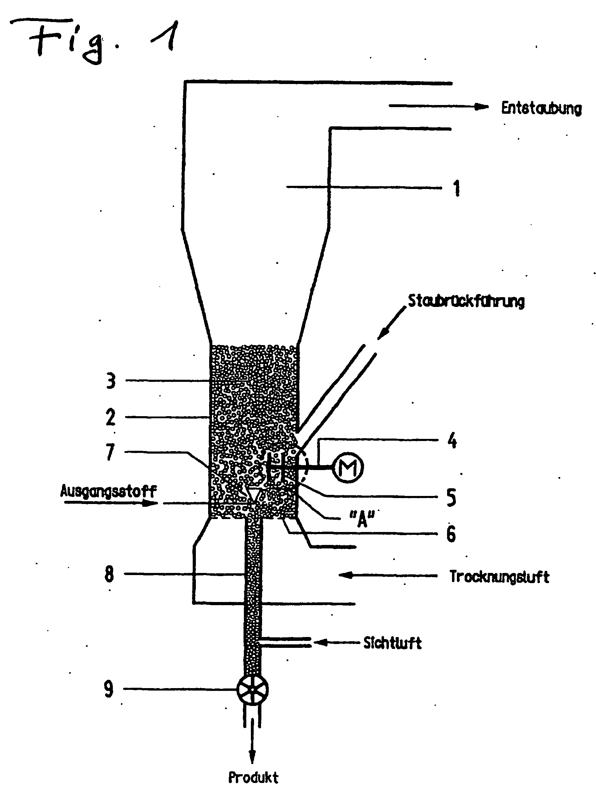

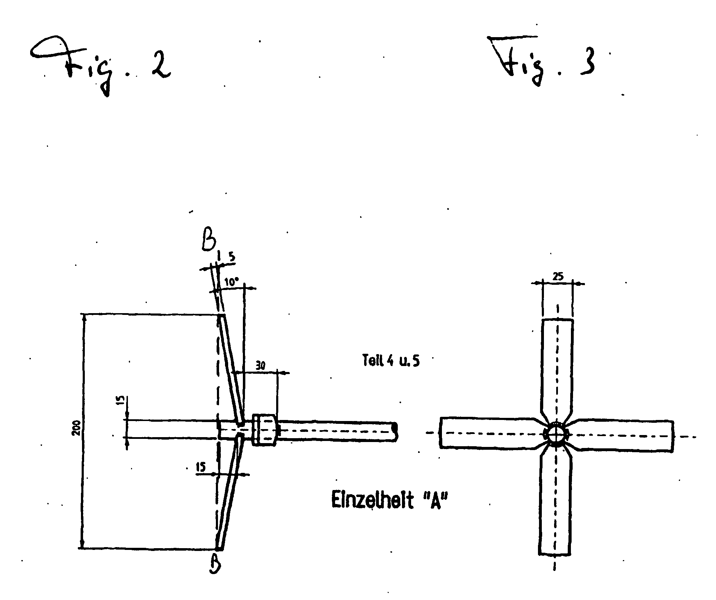

In Fig.1 bezeichnet das Bezugszeichen 1 die Wirbelschicht-Granulationstrocknungsvorrichtung. Diese weist eine Wirbelschichtkammer 2 auf, welche zur Aufnahme der Partikel 3 der Wirbelschicht 3 geeignet ist. Im gezeigten Beispiel handelt es sich bei der Wirbelschichtkammer 2 um eine zylindrische Trocknungskammer, die von unten nach oben durch den Siebboden 6 von Heißluft durchströmt wird. Dabei befindet sich über dem runden Gasverteilerboden 6 das Trockenprodukt 3 im fluidisierten Zustand in der Wirbelschichtzone, welche im vorliegenden Beispiel durch die Partikel angedeutet wird. Mit der Ziffer 7 wird eine Zwei-Stoff-Düse bezeichnet, die seitlich in die Wand des Trockners eingebaut ist. Von hier aus erfolgt die Zerstäubung der Ausgangsstoffe (Fermentationsbrühe) direkt in die Wirbelschicht hinein. Mit 4 wird ein regelbares Verdichtungs-Aggregat bezeichnet, welches einen motorischen Antrieb M sowie im einzelnen in Fig. 2 bzw. 3 dargestellte Aggregate aufweist. In Fig. 1 erkennbar ist der Flügelkopf 5, welcher vollständig in die Wirbelschicht 3 eintaucht. Ein Sichtrohr 8 ist unterhalb des Siebbodens 6 mit der Wirbelschichtkammer 2 in Verbindung und dient zur Zuführung von Sichtluft sowie zur Ausschleusung von Produkt durch die Austragsschleuse 9. Schließlich ist auch ein Staubaustrag an der Wirbelschicht-Granulationstrocknungsapparatur 1 vorgesehen, so daß entstehender Feinstaub zusammen mit der Luft aus dem Trockner 1 ausgetragen wird, in einem externen Zyklon abgeschieden und in die Wirbelschicht über die Staubrückführung rückführbar ist.

In der Figur 2 am besten erkennbar ist die Einzelheit A aus Figur 1, nämlich der Flügelkopf 5. Dieser besteht aus vier kreuzförmig zueinander angeordneten Flacheisen, welche an einem rotierbaren Schaft angeordnet sind, wobei der Schaft mit dem motorischen Antrieb M regelbar verbunden ist.

Die gezeigte Vorrichtung wird folgendermaßen betrieben: Die eingedickte oder rohe nicht eingedickte Fermentationsbrühe wird mittels der Zwei-Stoff-Düse in die Wirbelschicht eingedüst, wobei Luft oder ein sonstiges Gas oder Gasgemisch als Treibmittel dient. Die Wirbelschicht wird dabei stationär betrieben, wobei für das erste Anfahren des Granulators die Wirbelschicht mit einem geeigneten Anfahrmaterial zu füllen ist. Nach dem Fluidisieren dieses Materials mit Heißluft und dem Aufheizen der isolierten Trocknungskammer kann bereits die gewünschte Fermentationsbrühe bzw. das daraus durch eindickten hergestellte Konzentrat eingedüst werden. Die Wirbelschicht wird stationär betrieben, was insbesondere dann der Fall ist, wenn eine in etwa konstante Wirbelbettschicht aus getrocknetem und granuliertem Eingangsmaterial dauerhaft betrieben wird, wobei kontinuierlich die Feed-Brühe eingedüst wird und kontinuierlich ein Granulatstrom über das Sichtrohr und die Austragsschleuse entnommen bzw. abgezogen werden. Die feine Eindüsung führt zu einem schalenförmigen kompakten Granulatwachstum auf den Körnern in der Wirbelschicht.

In der Wirbelschicht wird über den Verdichter eine ständige Kompaktierung der Granulatkörner erzielt, so daß die Partikel über einer vorbestimmten Partikeldichte bleiben. Die Kornobergrenze ist hierbei ebenfalls eine Funktion des auf den Feststoffdurchsatz bezogenen Energieeintrags des Verdichters. Ein Sichtungsprozeß über einen separaten Sichterluftstrom von unten in die Schicht sorgt dafür, daß nur Partikel über die gewünschte Korngröße von etwa 500 µm ausgetragen werden. Die Kombination von Verdichter und Sichter ergibt daher ein sehr enges Kornspektrum und eine hohe Schüttdichte des Endproduktes. Das Endprodukt wird beim Austrag kurz im Luftstrom gekühlt und kann anschließend nach einem Kontrollsieb direkt abgesackt werden.

Herstellung der Fermentationsbrühe und des Fermentatiohskonzentrats

In einem 50 m³ Fermentationsbehälter mit Rührwerk und Belüftungssystem werden 16760 kg sterile Lösung folgender Zusammensetzung vorgelegt:

| | |
|---|---|
| Wasser | 15600 kg |
| Melasse | 100 kg |
| Saccharose | 220 kg |
| Maisquellwasser | 250 kg |
| Ammoniumsulfat | 570 kg |
| Mineralsalze und Spurenstoffe | 20 kg |

und mit einer Ammoniaklösung auf einen pH-Wert von 6,9 eingestellt.

Dieser Lösung werden 3200 kg einer in einem separaten Fermentationsbehälter angezogenen Impfkultur eines Corynebacteriums glutamicum zugesetzt.

Innerhalb von 48 h werde bei 33 bis 35 °C sterile Lösungen von Saccharose und Ammoniumsulfat zudosiert.

Während der gesamten Fermentationsperiode wird der pH-Wert mittels Ammoniaklösung zwischen 6,5 und 7,0 gehalten. Die Belüftungsrate wird auf 0,5 bis 0,7 vvm eingestellt.

Die insgesamt eingesetzten Medien für diese Fermentation im 50 m³ Fermenter haben folgende durchschnittliche Zusammensetzung:

| | |
|---|---|
| Wasser | 20400 kg |
| Melasse | 400 kg |
| Saccharose | 8900 kg |
| Maisquellwasser | 290 kg |
| Ammoniumsulfat | 1220 kg |
| Ammoniak 25% | 2220 kg |
| Mineralsalze und Spurenstoffe | 65 kg |

Am Ende der Fermentationsperiode werden etwa 33,5 t einer rohen Fermentationsbrühe mit einem Feststoffgehalt von ca. 6000 kg und einem Gehalt an L-Lysinbase von ca. 2900 kg bis 3200 kg erhalten.

Die Fermentationsbrühe wird in einem Fallfilmverdampfer unter vermindertem Druck auf einen Feststoffgehalt von etwa 50 Gew.-% eingedickt.

Die Sprühgranulation dieser Konzentrate ist in den Beispielen 1 bis 4 beschrieben.

Für das erfindungsgemäße Verfahren kann selbstverständlich auch jede andere Fermentationsbrühe bzw. dessen Konzentrat eingesetzt werden. Beispielhaft seien die Fermentationsbrühen genannt, die in der europäischen Patentschrift EP 0 533 039 bzw. in den europäischen Patentanmeldungung EP 0 532 867 und EP 0 615 693 beschrieben sind.

### Beispiel 1:

Als Ausgangsstoff dient ein Fermentationskonzentrat aus laufender Produktion nach obiger Standardrezeptur zur Herstellung von Biolys 60. Das Konzentrat besitzt einen Wassergehalt von ca. 53 %, einen Gehalt an L-Lysinbase von ca. 24%, einen Gehalt an Zucker von ca. 1 %, einen Gehalt an Biomasse von ca. 10 % und einen Rest aus sonstigen Fermentationsnebenprodukten und Mineralstoffen.

In einer Wirbeschichtgranulations-Trocknungsanlage, ausgerüstet mit einem Anströmboden von ca. 400 mm Durchmesser und in die Wirbelschicht integriertem zweiflügligen Verdichter von 150 mm Durchmesser, wurden 30 kg Biolys 60-Granulat als Startfüllung vorgelegt. Der Verdichter wurde mit einer Umfangsgeschwindigkeit von 20 m/s betrieben. Die Wirbelschicht wurde mit Heißluft von etwa 210 °C als Trocknungs- und Fluidisierungsmittel beaufschlagt und es wurden kontinuierlich über eine Zweistoffdüse ca. 60 kg/h Konzentrat der Lysin-Fermentation mit obiger Zusammensetzung eingedüst. Nach etwa 4 - 5 Stunden wurde ein stationärer Betriebszustand erreicht wobei kontinuierlich ein Granulat mit folgenden Produktparametern ausgeschleust werden konnte.

Produktparameter eines in stationärer Fahrweise erhaltenen Biolys-Granulat

| | |
|---|---|
| Feuchte | ca. 3 % |
| Schüttdichte | 690 kg/m³ |
| Stampfdichte | 710 kg/m³ |
| Partikelgrößenverteilung | 10 % < 900 µm |
| | 50 % < 1200 µm |
| | 90 % < 1550 µm |
| Abrieb* | 0,2 % |
| Partikelbruchfestigkeit | 2,5 - 7 N |

| | |
|---|---|
| * Erweka-Friabilator, 50 g, 20 min, 20 U/min, 400 µm Sieb | |

### Beispiel 2:

Ausgangsmaterial der Granulation ist ein Fermentationskonzentrat aus der laufender Produktion nach obiger Rezeptur zur Herstellung von Biolys 60. Das Konzentrat besitzt einen Wassergehalt von ca. 51 %, einen Gehalt an L-Lysinbase von ca. 26 %, einen Gehalt an Zucker von ca. 1 %, einen Gehalt an Biomasse von ca. 10 % und einen Rest aus sonstigen Fermentationsnebenprodukten und Mineralstoffen.

In einer Wirbeschichtgranulations-Trocknungsanlage, ausgerüstet mit einem Anströmboden von 400 mm Durchmesser und in die Wirbelschicht integriertem Verdichter mit einem 5,5 kW Antrieb, wurden 40 kg Biolys 60-Granulat als Startfüllung vorgelegt. Der vierflüglige Verdichter wurde mit einer Umfangsgeschwindigkeit von 31 m/s betrieben. Der Leistungseintrag des Verdichter in die Wirbelschicht betrug 490 W. Die Wirbelschicht würde mit Heißluft von ca. 220 °C als Trocknungs- und Fluidisierungsmittel beaufschlagt und es wurde kontinuierlich über eine Zweistoffdüse das Konzentrat der Lysin-Fermentation mit obiger Zusammensetzung eingedüst. Im stationären Betriebszustand wurden ca. 37 kg/h Granulat mit folgenden Produktparametern kontinuierlich erzeugt und ausgeschleust.

Produktparameter des in stationärer Fahrweise erhaltenen Biolys-Granulats:

| | |
|---|---|
| Feuchte | 1,0 % |
| Schüttdichte | 737 kg/m³ |
| Stampfdichte | 756 kg/m³ |
| Partikelgrößenverteilung | 10 % < 390 µm |
| | 50 % < 600 µm |
| | 90 % < 980 µm |
| | 95 % < 1120 µm |
| Abrieb* | 0,04 % |

| | |
|---|---|
| * Erweka-Friabilator, 50 g, 20 min, 20 U/min, 45 µm Sieb | |

### Beispiel 3:

Ausgangsmaterial der Granulation ist ein Fermentationskonzentrat aus der Produktion von Biolys 60 nach obiger Rezeptur. Das Konzentrat besitzt einen Wassergehalt von ca. 54 %, einen Gehalt an L-Lysinbase von ca. 24 %, einen Gehalt an Zucker von ca. 1 %, einen Gehalt an Biomasse von ca. 10 % und einen Rest aus sonstigen Fermentationsnebenprodukten und Mineralstoffen.

Die Wirbeschichtgranulations-Trocknungsanlage mit 400 mm Anströmboden und integriertem vierflügeligen Verdichter mit einer Umfangsgeschwindigkeit von 31 m/s und dem Leistungseintrag von 490 W wurde mit Heißluft von ca. 250 °C als Trocknungs- und Fluidisierungsmittel beaufschlagt. Über eine Zweistoffdüse wurde das Konzentrat der Lysin-Fermentation mit obiger Zusammensetzung eingedüst. Im stationären Betriebszustand, wurden ca. 47 kg/h Granulat mit folgenden Produktparametern kontinuierlich erzeugt und ausgeschleust.

Produktparameter des in stationärer Fahrweise erhaltenen Biolys-Granulats:

| | |
|---|---|
| Feuchte | 1,3 % |
| Schüttdichte | 718 kg/m³ |
| Stampfdichte | 747 kg/m³ |
| Partikelgrößenverteilung | 10 % < 830 µm |
| | 50 % < 1090 µm |
| | 90 % < 1360 µm |
| Abrieb* | 0,14 % |

| | |
|---|---|
| * Erweka-Friabilator, 50 g, 20 min, 20 U/min, 45 µm Sieb | |

### Beispiel 4:

Ausgangsmaterial der Granulation ist eine Mischung aus Fermentationskonzentrat aus der Produktion von Biolys 60 nach obiger Rezeptur und Saccharose als Standardisierungsmittel. Dem Konzentrat wurde kristalline Saccharose beigemischt und so lange gerührt, bis die Saccharose komplett gelöst war. Dieses Konzentrat besitzt einen Wassergehalt von 50 %, einen Gehalt an L-Lysinbase von 24 %, einen Gehalt an Zucker plus Saccharose von ca. 2,7 %, einen Gehalt an Biomasse von ca. 10 % und einen Rest aus sonstigen Fermentationsnebenprodukten und Mineralstoffen.

Die Wirbeschichtgranulations-Trocknungsanlage mit 400 mm Anströmboden und integriertem vierflügeligen Verdichter mit einer Umfangsgeschwindigkeit von 31 m/s und einem Leistungseintrag von 490 W wurde mit Heißluft von ca. 220 °C als Trocknungs- und Fluidisierungsmittel beaufschlagt. Über eine Zweistoffdüse wurde das Konzentrat der Lysin-Fermentation mit obiger Zusammensetzung eingedüst. Im stationären Betriebszustand, wurden ca. 38 kg/h Granulat mit folgenden Produktparametern kontinuierlich erzeugt und ausgeschleust.

Produktparameter des in stationärer Fahrweise erhaltenen Biolys-Granulats:

| | |
|---|---|
| Feuchte | 1,3 % |
| Schüttdichte | 725 kg/m³ |
| Stampfdichte | 749 kg/m³ |
| Partikelgrößenverteilüng | 10 % < 420 µm |
| | 50 % < 640 µm |
| | 90 % < 1000 µm |
| Abrieb* | 0,10 % |

| | |
|---|---|
| * Erweka-Friabilator, 50 g, 20 min, 20 U/min, 45 µm Sieb | |

### Beispiel 5:

Ausgangsmaterial der Granulation ist eine aufkonzentrierte Fermentationsbrühe nach Beispiel 2 der.europäischen Patentanmeldung EP 0 615 693. Das Konzentrat besitzt einen Wassergehalt von ca. 53 %. Nach der Granulation wurde folgende Zusammensetzung bestimmt:

| | |
|---|---|
| L-Lysinbase | 52 Gew.-% |
| andere a-Aminosäuren | 3 Gew.-% |
| Proteine | 9 Gew.-% |
| Carbonsäuren mit weniger als 8 C-Atomen | 7 Gew.-% |
| Zucker | 2 Gew.-% |
| Fette und Öle | 3 Gew.-% |
| Mineralstoffe | 21 Gew.-% |
| Wasser | 1,3 Gew.-% |

In einer Wirbeschichtgranulations -Trocknungsanlage, ausgerüstet mit einem Anströmboden von 400 mm Durchmesser und in die Wirbelschicht integriertem Verdichter mit einem 5,5 kW Antrieb, wurden 40 kg Granulat als Startfüllung vorgelegt. Der vierflüglige Verdichter wurde mit einer Umfangsgeschwindigkeit von 31 m/s betrieben. Der Leistungseintrag durch den Verdichter in die Wirbelschicht betrug 490 W. Die Wirbelschicht wurde mit Heißluft von ca. 220 °C als Trocknungs- und Fluidisierungsmittel beaufschlagt und es wurde kontinuierlich über eine Zweistoffdüse das Konzentrat der Lysin-Fermentation mit obiger Zusammensetzung eingedüst. Im stationären Betriebszustand wurden ca. 35 kg/h Granulat mit folgenden Produktparametern kontinuierlich erzeugt und ausgeschleust.

Produktparameter des in stationärer Fahrweise erhaltenen Biolys-Granulats:

| | |
|---|---|
| Feuchte | 1,3 % |
| Schüttdichte | 729 kg/m³ |
| Stampfdichte | 756 kg/m³ |
| Partikelgrößenverteilung | 10 % < 550 µm |
| | 50 % < 740 µm |
| | 90 % < 990 µm |
| Abrieb* | 0,15 % |

| | |
|---|---|
| * Erweka-Friabilator, 50 g, 20 min, 20 U/min, 45 µm Sieb | |

## Patentansprüche

1. Verfahren zur Herstellung eines Tierfuttermittel-Zusatzes auf Fermentationsbrühe-Basis, wobei der Zusatz als Fermentationsprodukt L-Lysin und die weiteren Inhaltsstoffe der Fermentationsbrühe vollständig oder zu einem überwiegenden Teil enthält,
**dadurch gekennzeichnet,**
**daß** die Fermentationsbrühe in einer Wirbelschicht in einem Schritt granuliert, kompaktiert und getrocknet wird, während eine zur Einstellung eines gewünschten Korndurchmessers und einer gewünschten Schüttdichte ausreichende Energiemenge zusätzlich zu der zur Erzeugung der Wirbelschicht benötigten Energie auf mechanischem Wege in die Wirbelschicht eingetragen wird, wobei die zusätzliche Energie durch bewegliche flächenförmige Gebilde eingetragen wird.

2. Verfahren nach Anspruch 1,
**dadurch gekennzeichnet,**
**daß** die zusätzliche mechanische Energie eine Erhöhung der Schüttdichte und eine Verringerung des mittleren Korndurchmessers bewirkt, verglichen mit einer Wirbelschicht-Granulationstrocknung, bei der keine zusätzliche mechanische Energie eingetragen wird.

3. Verfahren nach Anspruch 1 oder 2,
**dadurch gekennzeichnet,**
**daß** die zusätzlich eingetragene mechanische Energie im Sinne einer Oberflächenbehandlung und Kompaktierung auf das sich aufbauende Korn einwirkt.

4. Verfahren nach Anspruch 1,
**dadurch gekennzeichnet,**
**daß** rotierende Flügel, Klingenflächen oder Flacheisen in der Kammer des Wirbelbetts verwendet werden.

5. Verfahren nach einem der vorhergehenden Ansprüche,
**dadurch gekennzeichnet,**
**daß** die mittlere Partikelgröße des Tierfuttermittel-Zusatzes auf Werte zwischen 0,1 und 1,5 mm eingestellt wird.

6. Verfahren nach Anspruch 5,
**dadurch gekennzeichnet,**
**daß** die Größe der Teilchen des Tierfuttermittelzusatzes so eingestellt wird, daß 95 % der Partikel im Bereich zwischen 0,1 und 1,5 mm liegen.

7. Verfahren nach Anspruch 6,
**dadurch gekennzeichnet,**
**daß** 95 % der Partikel im Bereich zwischen 0,3 und 1,2 mm liegen.

8. Verfahren nach einem der vorhergehenden Ansprüche,
**dadurch gekennzeichnet,**
**daß** die Schüttdichte des Tierfuttermittel-Zusatzes auf > 600 kg/m³ eingestellt wird.

9. Verfahren nach Anspruch 6,
**dadurch gekennzeichnet,**
**daß** die Schüttdichte des Tierfuttermittel-Zusatzes auf > 700 kg/m³ eingestellt wird.

## Claims

1. A process for the preparation of an animal feed supplement based on fermentation broth, wherein the supplement contains wholly or predominantly L-lysine, as the fermentation product, and the other constituents of the fermentation broth,
**characterised in that**
the fermentation broth is granulated, compacted and dried in a fluidised bed in one step, whilst a sufficient amount of energy to obtain a desired particle diameter and a desired bulk density is introduced into the fluidised bed by mechanical means in addition to the energy required to produce the fluidised bed, the additional energy being introduced by movable, uniplanar structures.

2. A process according to claim 1,
**characterised in that**
the additional mechanical energy brings about an increase in the bulk density and a reduction in the mean particle diameter compared with a fluidised bed granulation-drying in which no additional mechanical energy is introduced.

3. A process according to claim 1 or 2,
**characterised in that**
the additionally introduced mechanical energy acts in the manner of a surface treatment and compacting on the developing granule.

4. A process according to claim 1,
**characterised in that**
rotating blades, blade surfaces or flat bars are used in the chamber of the fluidised bed.

5. A process according to one of the preceding claims,
**characterised in that**
the mean particle size of the animal feed supplement is adjusted to values of between 0.1 and 1.5 mm.

6. A process according to claim 5,
**characterised in that**
the size of the particles of the animal feed supplement is adjusted in such a way that 95% of the particles are in the region between 0.1 and 1.5 mm.

7. A process according to claim 6,
**characterised in that**
95% of the particles are in the region between 0.3 and 1.2 mm.

8. A process according to one of the preceding claims,
**characterised in that**
the bulk density of the animal feed supplement is adjusted to >600 kg/m³.

9. A process according to claim 6,
**characterised in that**
the bulk density of the animal feed supplement is adjusted to >700 kg/m³.

## Revendications

1. Procédé pour la préparation d'un additif fourrager à base d'un moût de fermentation, l'additif contenant comme produit de fermentation de la L-lysine et les autres constituants du moût de fermentation, complètement ou en partie principale, **caractérisé en ce qu'**on granule, compacte et sèche le moût de fermentation dans un lit fluidisé en une étape, en introduisant par voie mécanique dans la couche fluidisée, une quantité d'énergie suffisante pour le réglage d'un diamètre de granule souhaité et une densité apparente souhaitée, en plus de l'énergie nécessaire pour la réalisation de la couche fluidisée, l'énergie supplémentaire étant introduite par des structures planes mobiles.

2. Procédé selon la revendication 1, **caractérisé en ce que** l'énergie mécanique supplémentaire provoque une augmentation de la densité apparente et une diminution du diamètre moyen du granulat, comparé à un séchage par granulation en lit fluidisé, dans lequel on n'introduit pas d'énergie mécanique supplémentaire.

3. Procédé selon la revendication 1 ou 2, **caractérisé en ce que** l'énergie mécanique supplémentaire introduite agit dans le sens d'un traitement de surface et d'un compactage sur le granulat qui se forme.

4. Procédé selon la revendication 1, **caractérisé en ce qu'**on utilise dans la chambre du lit fluidisé des ailes en rotation, des faces de lame de couteau en rotation ou des fers plats en rotation.

5. Procédé selon l'une quelconque des revendications précédentes, **caractérisé en ce que** la taille moyenne des particules de l'additif fourrager est réglée à des valeurs entre 0,1 à 1,5 mm.

6. Procédé selon la revendication 5, **caractérisé en ce que** la taille des particules de l'additif fourrager est réglée de telle manière que 95 % des particules sont situées dans la plage entre 0,1 et 1,5 mm.

7. Procédé selon la revendication 6, **caractérisé en ce que** 95 % des particules sont situées dans la plage entre 0,3 et 1,2 mm.

8. Procédé selon l'une quelconque des revendications précédentes, **caractérisé en ce que** la densité apparente de l'additif fourrager est réglée à > 600 kg/m³.

9. Procédé selon la revendication 6, **caractérisé en ce que** la densité apparente de l'additif fourrager est réglée à > 700 mg/m³.
